Europäisches Patentamt

European Patent Office

Office européen des brevets

(11) Publication number: **0 390 464**

**A2**

## EUROPEAN PATENT APPLICATION

(21) Application number: 90303194.6

(51) Int. Cl.5 **B01D 53/14, B05B 15/12**

(22) Date of filing: 26.03.90

(30) Priority: 27.03.89 US 328638

(43) Date of publication of application:
03.10.90 Bulletin 90/40

(84) Designated Contracting States:
BE DE ES FR GB IT SE

(71) Applicant: NALCO CHEMICAL COMPANY
One Nalco Center
Naperville Illinois 60566-1024(US)

(72) Inventor: Zuerner, Edwin C., Jr.
2341 London Ct.
Troy, MI 48098(US)
Inventor: Beckman, John A.
48745 Pinehill Drive
Plymouth, MI 48107(US)

(74) Representative: Harrison, David Christopher
et al
MEWBURN ELLIS 2 Cursitor Street
London EC4A 1BQ(GB)

(54) Mist elimination in paint spraying.

(57) A process of operating a paint spray booth system using an oil-in-water emulsion to collect hydrocarbon emission, to detackify paint, and to collect paint solids, includes circulating within said paint spray booth system an oil-in-water emulsion comprising:

(a) 1-50% by weight of an organic liquid having a boiling point of at least 150°C;

(b) 0.1-30% by weight of the organic liquid of an oil-in-water emulsifier; and

(c) the balance, water, said emulsion having a pH ranging from 7.5-12.0 and being rapidly broken into separate oil phases, and paint sludge phases by adjusting the pH of the emulsion to below 6.5. A high efficiency mist eliminator may be used within the exhaust side of said paint spray booth system in a manner allowing the treatment of the entire exhaust gas stream by the mist eliminator, to collect a portion of oil, water, paint particulate, and hydrocarbon emissions entrapped in the exhaust gas stream and recycle it to the circulating oil-in-water emulsion.

## MIST ELIMINATION IN PAINT SPRAYING

Paint spray booths operate to collect organic solvents contained in the formulation of the paint being sprayed and to collect oversprayed paint that does not collect on the surfaces being painted or coated. A recent improvement in the art of operating paint spray booths includes the use of an oil-in-water emulsion in place of a standard recirculating water solution to collect both paint solids and residue as well as hydrocarbon solvents and such other emissions as might be caused by spraying the paint.

The use of these oil-in-water emulsions can aid in controlling hydrocarbon emissions from a paint spray booth operating with the oil-in-water emulsions as well as act as a paint detackifier not only for the standard paints used, such as enamels and lacquers. but also for recently developed paint formulations such as water-based paint formulations, and the combined use of base coats and clear coats. as well as the two component catalyzed paint systems. particularly urethane based coatings - both single and two component coatings - and the like.

The use of these oil-in-water emulsions are described in US-A-4.396,405. US-A-4.363,199. US-A-4,378,235 and US-A-4.750,919. In addition, certain other types of aqueous solutions involving hydrotropes can also be used to control hydrocarbon emissions to achieve paint detackification, and to collect paint oversprayed solids and sludges. This technology has been described in US-A-4.444,573, US-A-4.523,932, and US-A-4,554,026.

In the various technologies taught in the aforementioned US patents, paint spray booths operate by circulating an oil-in-water emulsion as described therein, so that the paint overspray and organic vapors contact a liquid curtain formed by this emulsion, which emulsion acts to collect, detackify, and disperse the paint overspray in the emulsion, and absorb certain hydrocarbon emissions and solvents formulated in the paint, and to suspend and recycle paint particulate matter to form a paint sludge which can be easily removed from the emulsion, either before or after breaking the emulsion. The technologies taught and claimed function in such a way that the aqueous phase, the oil phase and any emulsifiers or other additives can be recovered, recycled and reused and the paint sludge or the particulates, and solvents can be isolated, separated and either burned as an auxiliary or waste derived fuel or recycled and used in any manner chosen by the operator.

In the use of oil-in-water emulsions to accomplish any and all of the goals taught in the prior art, as referenced above, we have discovered certain improvements which not only improve the operation of the paint spray booth, but also surprisingly, improve the quality of the paint job being accomplished in such a booth operating with a recirculating oil-in-water emulsion. Other benefits including control and reduction of particulates being exhausted to the environment are also simultaneously achieved. The present invention therefore contributes to improved quality of a paint job normally obtained by the use of the oil-in-water emulsions in a paint spray booth and also to improved air quality and water quality in the surrounding environment. It also allows for economic recovery of emulsion so used. and recycling and reuse of same.

The exhaust side of paint spray booths do not operate dry. All spray booth exhaust streams contain entrained water and oil droplets, paint particulates. and such other residue obtained in the painting process or by contact of the booth air with the liquid curtain circulating in a paint spray booth. This residue is normally exhausted into the atmosphere and can cause environmental difficulties, with the collection of debris on surrounding buildings, automobiles, houses. roads, and the like. When the debris is hydrocarbonaceous or oily debris, it can contribute to storm sewer contamination by these collected oils, paint residues, and the like. When the paint spray booth system is operating using the oil-in-water emulsions as described above, the exhaust gas stream, in addition to containing entrained water droplets, paint overspray, paint particulates, and the like, may also contain oil droplets derived from the oil-in-water emulsion and certain amounts of entrained hydrocarbon emissions.

When a paint spray booth is operating with a water curtain or water scrubbing only to collect paint overspray, detackify this overspray and collect the detackified paint sludges, an important and difficult problem exists in the exhaust stream system, which may normally contain low efficiency mist eliminators such as horizontally placed baffles. This problem occurs for a number of reasons. For example, the low-efficiency mist eliminators or baffles become coated with agglomerated paint solids, detackified and partially detackified particulates, and for all intents and purposes, become useless for their intended purpose of trapping these discharges. Therefore the fouled baffles contribute to low efficiency control of exhaust stream quality when such paint spray booth systems operate exclusively with water. Low efficiency operation also is caused when breaks occur in the water curtain, which breaks may be caused by deposits of paint residues on the surfaces controlling formation of this water curtain.

We have discovered that when the paint spray booth system is operating with an oil-in-water emulsion, as described above, the low efficiency mist eliminators are maintained in a clean fashion, thereby increasing the ability to scrub from the exhaust such gases carrying entrained water droplets, oil droplets, paint solids, hydrocarbon emissions, and the like.

Also, surfaces controlling the water curtain are maintained in a clean condition and breaks in the emulsion curtain do not occur with any measurable frequency, again contributing to efficient operation of the booth.

However, the normal booth exhaust systems even when operating cleanly using the oil-in-water emulsions still exhaust into the atmosphere undesirable quantities of water, oil, paint solids, and in some cases, hydrocarbon emissions, so that an improvement in the art is needed to control such emissions. This problem is solved by incorporating high efficiency mist eliminators into the exhaust systems of the paint spray booth operating with the oil-in-water emulsions described herein.

With the discovery that the oil-in-water emulsion can maintain in a clean condition even low efficiency mist eliminators normally present in the exhaust gas system of paint spray booths, it was decided to attempt to install in a later portion of the exhaust gas control system of the spray booth system, beyond the location in which low efficiency baffles are normally present, a high efficiency mist eliminator so as to entrain, capture and thereby permit return to the recirculating oil-in-water emulsion being used in the paint spray booth system any water, oil, paint solids, hydrocarbon emissions, and the like, which may be collected, entrained, or knocked out of the exhaust gases by the high efficiency mist eliminator. By the term, high efficiency mist eliminator we mean a mechanical device installed in a moving gas stream in which a mist is entrained and which device when in an exhaust gas system is capable of removing at least 10% and more preferably at least one-half of any liquid, solid, or other particulate matter entrained or dispersed in the exhaust gas medium.

In accordance with the invention therefore the process of using an oil-in-water emulsion to collect hydrocarbon emissions and paint residues from the exhaust gas stream of a paint spray booth includes circulating within said paint spray booth system, an oil-in-water emulsion comprising:

(a) 1-50% by weight of an organic liquid having a boiling point of at least 150 °C;

(b) 0.1-30% by weight of the organic liquid of an oil-in-water emulsifier; and

(c) the balance, water; said emulsion having a pH ranging from 7.5-12.0 and being rapidly broken into separate oil phases, aqueous phases, and paint sludge phases, by adjusting the pH of the emulsion to below 6.5, and is characterized by passing the entire exhaust gas stream through a high efficiency mist eliminator incorporated within the gaseous exhaust system of said paint spray booth system in a manner allowing the treatment of the entire exhaust gas stream by said high efficiency mist eliminator, thereby to collect a portion, preferably a major portion, of oil, water , paint residues, and hydrocarbon emissions entrapped in the exhaust gas stream. The emulsion may then be remade and returned to the circulating oil-in-water emulsion contained in said paint spray booth system. By the term, major portion, we mean at least 50% of each of the components, liquid or solid, entrained in the gas stream, such components including oil, water, paint solvents, paint solids, paint particulates, and the like.

The mist eliminator so incorporated as above has been found to collect and knock out at least 10 weight percent, and up to preferably at least 50 weight percent of the total amount of accumulated oil droplets, water droplets, paint particulates and solids, and hydrocarbon emissions and to return that quantity, or above, to the oil-in-water emulsions being circulated within the paint spray booth system. These systems are useful when the exhaust gas velocity is maintained between about 300 to about 800 feet per minute (about 150 to 410 cm/sec), but are particularly useful when the exhaust gas has an optimum face velocity of between about 450-650 feet per minute (about 225 to 330 cm/sec). Surprisingly, these high efficiency mist eliminators function with minimal maintenance and without severely plugging, but only when the booth is operating with the oil-in-water emulsions as the scrubbing liquid.

The portion of oil, water, paint particulate matter, and hydrocarbon emissions collected by the high efficiency mist eliminator and returned to a sump, either specifically designed into the mist eliminator and connected to the paint spray booth system, or returned directly into the spray booth sump itself, which sump contains oil-in-water emulsions being circulated within said paint spray booth system depends upon many factors. Primarily, the portions recovered depends upon the mist eliminator design, particularly the ratio of surface area of contacting surface to gas volume contacted, the face velocity of exhaust gas, and the amount of water, oil, paint particulate and hydrocarbon emissions contained in the exhaust gas or entrained and entrapped within the exhaust gas stream.

Normally, by incorporating a high efficiency mist eliminator, which is in contact with the entire exhaust gas stream, we have found that we can remove at least 10 weight percent of the total amount of oil, water, paint solids, and hydrocarbon emissions carried in the exhaust gas system exiting the paint spray booth. The invention is capable of removing at least 20 weight percent of the oil, water, paint solids and hydrocarbon emissions, and, depending upon the various factors mentioned above is preferably capable of removing at least 50 weight percent of the total oil, water, paint solids, and hydrocarbon emissions carried in the exhaust gases exiting the paint spray booth. Up to 95% of these suspended mists have been removed.

Primarily, the high efficiency mist eliminator is designated as being high efficiency when it is capable of treating the entire waste exhaust gas streams exiting the paint spray booth and removing therefrom at least 10, and preferably at least 20 to 50 weight percent of the oil, water, and paint solids included and carried with the entire exhaust gas stream.

Examples of such a high efficiency mist eliminator are those mist eliminators provided by the Munters Company and designated as the Munters Series T-272 Mist Eliminator and the Munters Series T-271 Mist Eliminator. These mist eliminators are described in product literature provided by the Munters Company, entitled "Mist Eliminators, Vertical Flow T-271 and T-272", provided by Munters Company, 1205 Sixth St. S.E., P.O. Box 6423, Fort Meyers, Florida, 33911, which literature is incorporated herein by reference.

The mist eliminators, however, are not limited to these Munters devices and can also include not only vertical flow mist eliminators, but may also include horizontal flow mist eliminators and can include any mist eliminators, demister pads, and such devices, including compacted steel wool, compacted plastic packing, and the like, which design permits accumulation and agglomeration and collection and return of at least 10, and preferably at least 20 to 50 weight percent of the oil, water, paint solids, and optionally, hydrocarbon emissions contained in the exhaust gases exiting the paint spray booth system. Installation of the mist eliminators in a horizontal, vertical or angular disposition is not critical as long as the entire exhaust gas stream is contacted by the mist eliminator devices. However, certain dispositions of the devices may be found to improve recycle of liquid components and all dispositions/locations within the exhaust systems are included. They may be incorporated in substitution for or in addition to any low-efficiency devices present; they may be post-fitted to pre-existing systems.

Also, it has been found that these high efficiency mist eliminators operate most effectively when the pressure drops across the devices range between about .05 to 1.0 inches (ca 1.25 to 25 mm) of water; preferably the pressure drops range between about 0.1 to 0.5 inches (2.5 to 12.5 mm) of water. If the pressure drop exceeds 1.0 inches (about 25 mm) of water, or above, the efficiency may be recovered by simply washing the device with water, or even preferably with the emulsion being used.

It has been found that the inclusion of such high efficiency mist eliminators into the exhaust system of a paint spray booth operating with only a water curtain causes the mist eliminator to become badly fouled and plugged by paint and other particulate debris so that operations are either totally shut down or require daily, and after more than daily non-operational off-line clean-up. However, when these high efficiency mist eliminator devices are installed in the exhaust system of a paint spray booth operating with the oil-in-water emulsion described above, the devices are maintained in a clean condition by the emulsion components collected by the devices or, if desired, by incorporating into the exhaust system a spray nozzle and spray header system which carries either water fresh oil-in-water emulsion, or oil-in-water emulsion from the paint spray booth liquid sump, which sump contains the oil-in-water emulsion also used to form the liquid curtain which captures oversprayed paint and paint components.

When spray washers are used, the exhaust fans should be inoperable to avoid excessive liquid discharges, but this cleaning procedure is normally only required once a week or less, since the mist eliminators are not frequently fouled badly when the oil-in-water curtain is used. The spray headers and nozzles are used preferably and only when the pressure drop across the mist eliminators is at least 0.5 inches (about 12.5 mm) of water, and most preferably this spray nozzle header cleaning system is used when the pressure drop exceeds 1.0 inches (about 25 mm) of water, or more.

Preferably the mist eliminator of this invention is installed in the closest proximity to the first contact of the exhaust air with the liquid curtain formed by operation of the paint spray booth. The liquid curtain is formed by pumping the oil-in-water emulsion through the paint spray booth to form this curtain and to collect and recirculate the curtain liquid. However, the high efficiency mist eliminators may also be installed at the roof-line of the exhaust system, in the exhaust stack itself, or anywhere inbetween. The devices may be installed singly, or multiply, either in parallel or in series, in this exhaust system.

Preferably, as indicated above, a spray nozzle or a system of spray nozzles, and feeders needed to service such nozzles, may also be installed immediately before or immediately after the mist eliminator or collector devices. The nozzles are arranged in such a pattern so as to direct said liquid against, into, throughout, or within the mist eliminator device for cleaning/anti-fouling purposes. As before the liquid to be pumped through these header nozzle devices may be water, fresh oil-in-water emulsion, or recirculating oil-in-water emulsions, or any combination thereof, or may be any other liquid cleaner chosen by the operator. If other cleaners are used, care should be taken to avoid contamination of the emulsion.

These spray header devices may also be used optionally as fire-control systems, but when such use is anticipated, the liquid to be used should only be water and the systems should be designed to pump, on an emergency basis, sufficient water to control fire should a fire occur. Although such fires have not occurred, it has been noted that the nearer the exit of the exhaust stack, the higher the relative amount of oil and paint solids is collected by these devices. Apparently water entrained in the exhaust gases vaporizes, thereby increasing the relative amounts of oily deposits occurring on the surfaces nearer the stack exit.

To better illustrate our invention, the following example is presented.

EXAMPLE

In a paint spray booth operating in the Midwest and using the oil-in-water emulsion technology taught in the above referenced and incorporated US patents, a high efficiency mist eliminator was installed in the exhaust gas line near the roof line of the building in which the paint spray booth system was contained, to treat the entire exhaust gas stream exiting a paint spray booth system being operated exclusively with an oil-in-water emulsion as described above. The drain from the mist eliminator was piped such that collected oil, water, paint solids, and hydrocarbon emissions captured by the mist eliminator were returned to a sump which contained the oil-in-water emulsion being used for circulation within the paint spray booth system.

Before inclusion of this high efficiency mist eliminator in the exhaust gas system of the paint spray booth system, operators of this system had noticed accumulation of oil, oily particulate matter, paint particulate matter, and other debris or the roof of the building near the stack exit. There had also been observations by some employees indicating accumulation of some oil droplets on various surfaces located within wind range of the stack exhausting the paint spray booth gases. Operators were also concerned about oil loss through this system, since the emulsion oil is one of the expensive ingredients used within the oil-in-water emulsion which forms the liquid curtain contacting the spray booth exhaust gases.

Although improvement of the overall operation of paint spray booth system when using the oil-in-water emulsions had been noticed prior to installation of the mist eliminators, these oil losses and environmental concerns were problems paramount in the eyes of the operator.

By using the oil-in-water emulsion in place of water we had discovered that the internal low efficiency mist eliminators, for example the standard baffle systems, normally installed in such a paint spray booth system had been cleaned of and maintained free of detackified paint particulates and other debris which had normally agglomerated onto and in such baffle system when the paint booth was operating on a straight water overspray.

After observing the cleanup of the low efficiency internally installed baffles by switching to an oil-in-water emulsion as the paint overspray control system, we made arrangements to install the Munters high efficiency mist eliminator which treated the entire exhaust gas stream from the paint spray booth which was now being operated on oil-in-water emulsions. Even when clean, the low efficiency mist eliminators did not properly clean the exhaust gases of debris, particulates, oil mist and the like.

Within one week of the installation and start up of this newly designed exhaust gas system using such a high efficiency mist eliminator, immediate improvements were observed. For example, there was less (estimated as about a 70-80% reduction) oil being accumulated on the roof of the building; there were no further employee observations regarding accumulation of oil droplets or paint particulate matter on surrounding surfaces, and most unexpectedly, the operator of the paint shop noticed an immediate improvement in hydrocarbon emissions to the environment as judged by the above observations. The operator also anticipated saving about 2-5% of his costs in replacing lost oil from the use of oil-in-water emulsions in the paint spray booth.

In fact, the paint shop using the paint spray booth system with recirculating oil-in-water emulsion, increased its quality standards at least two times in the subsequent months in which this operation continued. This oil-in-water system, whether using the high efficiency mist eliminator or not, decreased rejected paint jobs, and increased overall quality of the painted surfaces of each job. By increasing its quality standards, what we mean is that if the initial standards permitted an error of plus or minus 2n, where n is some arbitrary percentage determined by economic and quality parameters, then within the first forty five days of operation of the oil-in-water treatment system, the quality standards were reduced to include operation at a quality standard of plus or minus about 1.5n and then were further reduced to include quality standards for the operation of the entire system at plus or minus 1n or thereabouts. With the oil-in-water system at least 10% fewer pieces being painted, or "jobs", were rejected and in addition, when the high efficiency mist eliminator was installed this improvement in quality was accompanied by a standard of operation which also included improved control of oil and particulates exhausted to the atmosphere, as well as improved formation of the liquid curtain because of the elimination of deposits which previously caused breaks in the curtain.

All this in addition to improved control of air quality, improved recovery of oil, improved and lowered paint particulate exhausted to the atmosphere, and basically the elimination of at least at estimated 60-80% of oil droplets exhausted to the atmosphere.

The mist eliminator and this oil-in-water paint spray booth had operated for about three months at this trial site without plugging with paint solids, detackified or partially detackified paint or any other debris which would ordinarily clog a mist eliminator installed on a paint spray booth operating with just water scrubbing. Further operation has continued with minimal maintenance of the mist eliminator installed in this system. It is believed that the combination of using oil-in-water scrubbing of paint overspray and the presence of the high efficiency mist eliminator treating the entire exhaust gas stream has achieved the remarkable improvements described above.

## Claims

1. A process using an oil-in-water emulsion to collect hydrocarbon emissions and paint solids from the exhaust gas stream of a paint spray booth system, which process includes circulating within the paint spray booth system an oil-in-water emulsion comprising:
1-50% by weight of an organic liquid having a boiling point of at least 150°C;
0.1-30% by weight of the organic liquid of an oil-in-water emulsifier; and
the balance, water,
said emulsion having a pH ranging from 7.5-12.0 and being capable of being broken into separate oil phases, aqueous phases, and paint sludge phases by adjusting the pH of the emulsion to below 6.5, and characterized by passing the entire exhaust gas stream through a high efficiency mist eliminator incorporated within the exhaust side of the paint spray booth system to collect a portion of oil, water, paint particulate, and hydrocarbon emissions entrapped in the exhaust gas stream.

2. A process according to claim 1 also including:
separating paint sludge from oil and water phases;
adding more oil, emulsifier and/or water, as required, to reconstitute the oil-in-water emulsion; and combining both oil and water phases and mixing them while
readjusting pH to between 7.5-12.0 to remake said oil-in-water emulsion; and
recycling said oil-in-water emulsion to the paint spray booth system.

3. A process according to claim 2 which includes returning the portion of oil, water, paint particulate, and hydrocarbon emissions collected by the mist eliminator to a sump designed into the paint spray booth system, which sump contains oil-in-water emulsion to be circulated within said system.

4. A process according to any one of the preceding claims wherein the mist eliminator removes at least 10 weight percent of the total of the oil, water, paint solids, and hydrocarbon emissions carried in the exhaust gases exiting the paint spray booth system.

5. A process according to claim 4 wherein the mist eliminator removes at least 20 weight percent of the oil, water, paint solids and HCE carried in the exhaust gases.

6. A process according to claim 4 wherein the mist eliminator removes at least 50 weight percent of the total of the oil, water, paint solids, and hydrocarbon emissions carried in the exhaust gases exiting the paint spray booth system.

7. A process according to any one of the preceding claims wherein in addition to incorporating a high efficiency mist eliminator, a spray header/spray nozzle system is also incorporated immediately before or immediately after said mist eliminator, which spray header/spray nozzle system is equipped with means to provide to the mist eliminator for cleaning purposes a liquid which is water, fresh oil-in-water emulsion, recirculating oil-in-water emulsion, or admixtures thereof.

8. A process according to claim 7 wherein the spray header/spray nozzle system can provide to the mist eliminator system water in sufficient quantity for use to control fire in the exhaust.

9. A process according to any one of the preceding claims wherein the face velocity of the exhaust gas stream in the eliminator is 225 to 330 cm/sec.

10. A process according to any one of the preceding claims wherein the pressure drop across the eliminator is in the range 1.25 to 25 mm/$H_2O$.